# EUROPEAN PATENT APPLICATION

(11) **EP 3 167 991 A1**
(43) Date of publication of application: **17.05.2017**
(21) Application number: 15818389.7
(22) Date of filing: 22.06.2015
(51) Int. Cl.: B23C 5/20, B23C 5/06, B23C 5/16, B23C 5/24

(54) **CUTTING INSERT AND FACE MILLING CUTTER**

(30) Priority: 10.07.2014 JP 2014142238
(71) Applicant: Sumitomo Electric Hardmetal Corp., Itami-shi, Hyogo 664-0016 (JP)
(72) Inventor: KOIKE, Yusuke, Itami-shi Hyogo 664-0016 (JP); MATSUBARA, Kouki, Itami-shi Hyogo 664-0016 (JP); TAMURA, Takumi, Itami-shi Hyogo 664-0016 (JP); MAETA, Atsuhiko, Itami-shi Hyogo 664-0016 (JP)
(74) Representative: Boult Wade Tennant
(86) International application number: PCT/JP2015/067905
(87) International publication number: WO 2016/006425

(57) **Abstract**

A cutting insert comprising a cutting edge (4) formed by an intersection ridge between a rake face (5) and a side face (6), the cutting edge including a major cutting edge (4a), a flat cutting edge (4c), and a chamfer edge (4b) disposed between the major cutting edge and the flat cutting edge, wherein in a direct view of a side face near the flat cutting edge, a ratio of installation area length L2 of the chamfer edge to installation area length L3 of the major cutting edge is L2 : L3 = 2 : 8 to 5 : 5, and inclination angle θ₁ of the chamfer edge (4b) with respect to the flat cutting edge (4c) and inclination angle θ₂ of the major cutting edge (4a) with respect to the flat cutting edge (4c) are set to have a relationship of θ₁ < θ₂.

## Description

### Technical Field

The present invention relates to a cutting insert and a face milling cutter including the cutting insert.

### Background Art

For cutting of soft materials represented by aluminum, a cutting insert including a cutting edge made of single crystal diamond is used.

A cutting insert having a cutting edge made of single crystal diamond exhibits excellent welding resistance in machining of aluminum, and enables high-speed cutting.

However, in machining soft materials, for instance, aluminum by a face milling cutter, there is a problem in that burr occurs in an intersection portion (corner) between a side face of a workpiece on the side through which the cutter cuts through and a machined surface.

The burr can be reduced by thinning the thickness of chip or increasing the sharpness of the cutter.

Between these, the sharpness of the cutter can be increased by setting an axial rake or a radial rake to a positive angle.

Also, the chip thickness is thinned by decreasing a cutter feed at the time of machining, but with this method, the machining efficiency is reduced. Thus, as another technique for thinning the chip thickness, beveling the corners called chamfering is generally performed on the tip end (between a major cutting edge and a flat cutting edge that smooths a machined surface) of a major cutting edge parallel to the tool axis (see, for instance PTL 1).

### Citation List

### Patent Literature

PTL 1: Japanese Unexamined Patent Application Publication No. 8-141822

### Summary of Invention

### Technical Problem

As described above, when chamfering is performed on the tip end (between the major cutting edge and the flat cutting edge), in the milling cutter which uses highly brittle materials such as diamond for its cutting edge, particularly, the vicinity of the intersection between the major cutting edge and a chamfered portion is likely to be chipped.

Also, in machining with a large depth of cut in the axial direction, chips cut off by the major cutting edge are evacuated without being favorably divided, and get caught in periphery of the flat cutting edge, and due to this, the cutting edge may be damaged or a machined surface may be damaged.

An object of the present invention is to increase the strength of a corner formed in a cutting edge of a cutting insert while reducing burr and improving chip evacuation performance in machining soft materials by a face milling cutter.

### Solution to Problem

A cutting insert according an aspect of the present invention is for a face milling cutter and comprises a cutting edge formed by an intersection ridge between a rake face and a side face, the cutting edge including a major cutting edge, a flat cutting edge, and a chamfer edge disposed between the major cutting edge and the flat cutting edge.

In the cutting edge of the cutting insert, in a direct view of a side face near the flat cutting edge, a ratio of installation area length L2 of the chamfer edge to installation area length L3 of the major cutting edge is L2 : L3 = 2 : 8 to 5 : 5, and inclination angle θ₁ of the chamfer edge with respect to the flat cutting edge and inclination angle θ₂ of the major cutting edge with respect to the flat cutting edge are set to have a relationship of θ₁ < θ₂.

For the cutting insert, the flat cutting edge is disposed in a front face of the tool body, the major cutting edge is disposed in an outer circumference of the tool body, and the major cutting edge further in a posture having an inclination angle θ₂ of 45° to 80° is mounted in an outer circumference of an end of the tool body.

The present invention also provides a face milling cutter having such a structure. Advantageous Effects of Invention

A cutting insert according to an aspect of the present invention reduces burr in machining a soft material and improves chip evacuation performance.

In addition, the corner where the flat cutting edge and the chamfer edge intersect has an improved strength, and fracture of the corner is reduced.

### Brief Description of Drawings

[Fig. 1] Figure 1 is a perspective view illustrating a cutting insert according to an aspect of the present invention.
[Fig. 2] Figure 2 is a plan view of the cutting insert of Fig. 1.
[Fig. 3] Figure 3 is a side view of the cutting insert of Fig. 1.
[Fig. 4] Figure 4 is a front view of the cutting insert of Fig. 1.
[Fig. 5] Figure 5 is a bottom plan view of the cutting insert of Fig. 1.
[Fig. 6] Figure 6 is an enlarged view illustrating a portion of Fig. 2.
[Fig. 7] Figure 7 is a perspective view illustrating an example of a face milling cutter including the cutting insert of Fig. 1.
[Fig. 8] Figure 8 is a side view of the face milling cutter of Fig. 7.
[Fig. 9] Figure 9 is a front view of the face milling cutter of Fig. 7.
[Fig. 10] Figure 10 is a table (a photograph showing a corner condition of a workpiece on a cutter cut-through side) illustrating a relationship between an inclination angle θ₁ of a chamfer edge and occurrence conditions of burr, chipping.
[Fig. 11] Figure 11 is a photograph illustrating a relationship between an inclination angle θ₂ of a major cutting edge and processing conditions of chips.
[Fig. 12] Figure 12 is a chart summarizing evaluation results of relationship between the inclination angle θ₁ of the chamfer edge and the inclination angle θ₂ of the major cutting edge.

### Description of Embodiments

### [Description of Embodiment of Present Invention]

A cutting insert according to an aspect of the present invention is a cutting insert for a face milling cutter has a cutting edge formed by the intersection ridge between a rake face and a side face, and the cutting edge includes a major cutting edge, a flat cutting edge, and a chamfer edge disposed therebetween.

In a direct view of the side face on the flat cutting edge side, the ratio of installation area length L2 of the chamfer edge to installation area length L3 of the major cutting edge is L2 : L3 = 2 : 8 to 5 : 5. The installation area lengths of the chamfer edge and the major cutting edge referred herein are shorter than the actual sizes of respective cutting edges.

In addition, the inclination angle θ₁ of the chamfer edge with respect to the flat cutting edge (hereinafter simply referred to as the inclination angle), and the inclination angle θ₂ of the major cutting edge with respect to the flat cutting edge are set to have a relationship of θ₁ < θ₂. Preferable numerical values of the inclination angle are θ₁ = 10° to 30°, θ₂ = 45° to 80°.

It is to be noted that the direct view of the side face on the flat cutting edge side refers to the view of the side face on the flat cutting edge side in a direction of the cutter axis in a state where the cutting insert is mounted in the cutter body.

Also, the inclination angles θ₁ and θ₂ are angles with respect to the flat cutting edge which has a face angle of 0° (perpendicular to the axis of the cutter) in a use state.

In a cutting insert satisfying the above-mentioned relationship, the chamfer edge functions as part of the major cutting edge, and reduces burr on the cut-through side of a workpiece.

The inclination angle θ₁ of 45° of the chamfer edge is too large and may cause burr or chipping (fracture) at a workpiece corner on the cutter cut-through side, and thus the inclination angle θ₁ is preferably 30° or less.

Furthermore, the inclination angle θ₁ of 10° or greater allows the chamfer edge to function effectively. Due to these effects, when the inclination angle θ₁ = 10° to 30°, burr and chipping are reduced, and a machined surface in better condition is obtained.

When the above-mentioned relationship is satisfied, for length L4 in the cutter axis direction of a cutting edge consisting of two edges of the major cutting edge and the chamfer edge, and length (L2 + L3) in the cutter radial direction of the cutting edge consisting of the two edges, a relationship of {L4 > (L2 + L3)} is satisfied, and machining with a large depth of cut in the axis direction is also possible.

Furthermore, since the inclination angle θ₁ of 45° of the chamfer edge is set to 10° to 30° and the inclination angle θ₂ of 45° of the major cutting edge is set to 45° to 80°, the corner angle θ₃ (the angle formed by the chamfer edge and the major cutting edge) of corner C where the chamfer edge and the major cutting edge intersect is 110° or greater. Therefore, corner C is reinforced, and the fracture resistance of the corner C is increased and durability is improved.

In addition, since the inclination angle θ₂ of the major cutting edge is set to 45° or greater, the evacuation direction of chips is a direction in which chips flow away from a machined surface, and furthermore, in comparison with a cutting insert having an inclination angle θ₂ = 90°, chips cut off by the major cutting edge and curled have a smaller diameter and the chips are finely divided.

Thus, chips are unlikely to get caught in the periphery of the flat cutting edge, and damage to the cutting edge and injury of a machined surface due to chips got caught are also reduced.

In addition, since the inclination angle θ₂ of the major cutting edge is set to 80° or less, the thickness of chips cut off by the major cutting edge is thinner than the thickness of chips cut off by a cutting edge with θ₂ = 90°. The same goes with the chamfer edge, and if the inclination angle θ₁ of the chamfer edge is set to 25°, the chip thickness is decreased to approximately 80% compared with the cutting edge with θ₂ = 90°. Therefore, cutting main force decreases, and cutting resistance is reduced.

### [Details of Embodiment of Present Invention]

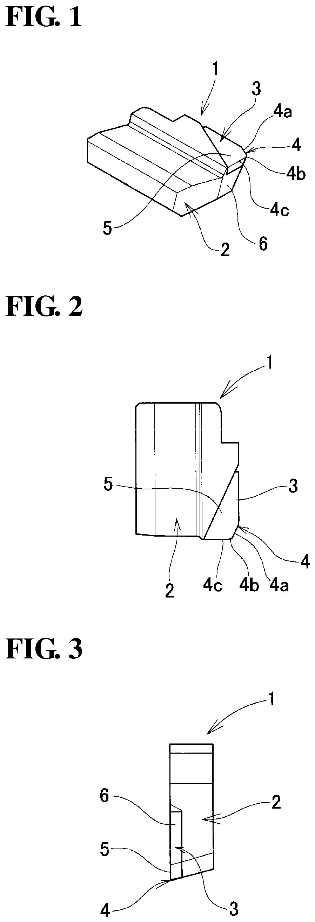

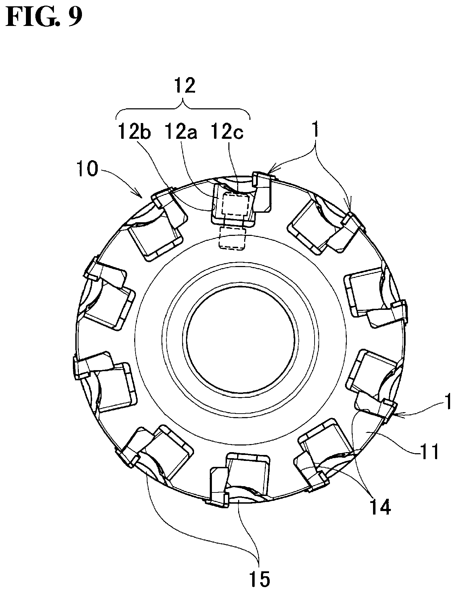

Hereinafter, specific examples of a cutting insert and a face milling cutter according to an embodiment of the present invention will be described with reference to Fig. 1 to Fig. 9 in the accompanying drawings.

Hereinafter, a specific example of a cutting insert according to an aspect of the present invention will be described with reference to the drawings. It is to be noted that the present invention is not limited to these example, and it is intended to include all modifications indicated by the scope of the claims and within the meaning and range equivalent to the scope of the claims.

The cutting insert 1 illustrated in Fig. 1 to Fig. 6 is formed by bonding a cutting edge chip 3 made of single crystal diamond or diamond sintered body (PCD) to one corner portion of the upper surface of base metal 2.

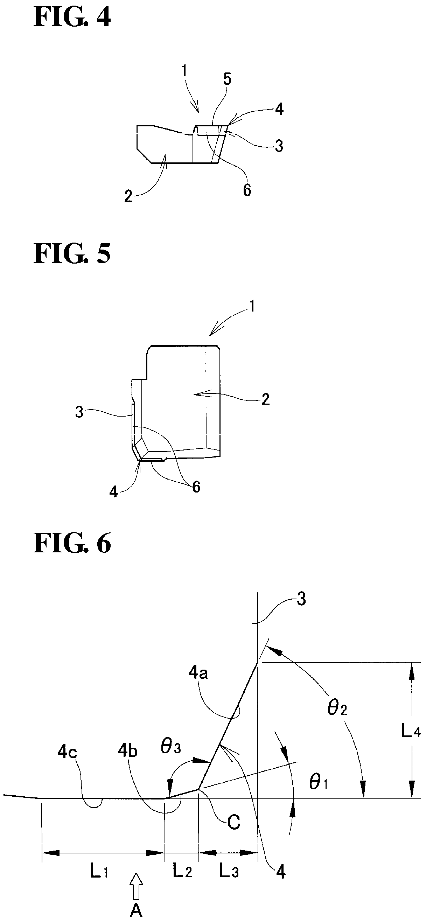

The cutting edge chip 3 is provided with a cutting edge 4. As illustrated in detail in Fig. 6, the cutting edge 4 formed by the intersection ridge between a rake face 5 and a side face 6 includes a major cutting edge 4a, a chamfer edge 4b, and a flat cutting edge 4c.

The inclination angle (= the inclination angle with respect to the surface machined on the flat cutting edge) θ₁ of the chamfer edge 4b with respect to the flat cutting edge 4c is set to 10° to 30°.

In addition, the inclination angle θ₂ of the major cutting edge 4a with respect to the flat cutting edge 4c with face angle = 0° is set to 45° to 80°, and the corner angle θ₃ of corner C where the chamfer edge 4b and the major cutting edge 4a intersect is 110° or greater. Therefore, chipping of corner C is suppressed.

For the major cutting edge 4a and the chamfer edge 4b, in the direct view (the view as seen in the direction of arrow A of Fig. 6) of the side face near the flat cutting edge 4c, let L2 be the installation area length of the chamfer edge 4b, L3 be the installation area length of the major cutting edge 4a, then the ratio between both lengths, L2 : L3 is set to 2 : 8 to 5 : 5.

In the case where L2 is smaller, L3 is larger than in L2 : L3 = 2 : 8, the effect of reducing burr provided by the chamfer edge 4b is reduced, and thus burr cannot be reduced efficiently.

In the case where L2 is larger, L3 is smaller than in L2 : L3 = 5 : 5, effect to the evacuation direction of chips of the chamfer edge 4b is increased, and thus a problem arises in that chips are discharged without being divided.

By the above-mentioned setting, in the cutting edge consisting of two edges of the major cutting edge 4a and the chamfer edge 4b, length L4 in the cutter axis direction and length (L2 + L3) in the cutter radial direction of the cutting edge satisfy the relationship of {L4 > (L2 + L3)}.

Also, installation area length L1 of the flat cutting edge 4c in the view as seen in the direction of arrow A of Fig. 6 is such length that satisfies the relationship of {L1 > (L2 + L3)}, and thus it is possible to increase the surface roughness of a machined surface finished by the flat cutting edge 4c.

It is to be noted that although the flat cutting edge 4c of the illustrated cutting insert is a linear edge with face angle = 0°, the flat cutting edge 4c may be an edge with a face angle or an edge curved in a convex arc. For a cutting insert having such as a flat cutting edge, such one is regarded as a flat cutting edge with a face angle of 0°, and inclination angles of the chamfer edge and the major cutting edge are set.

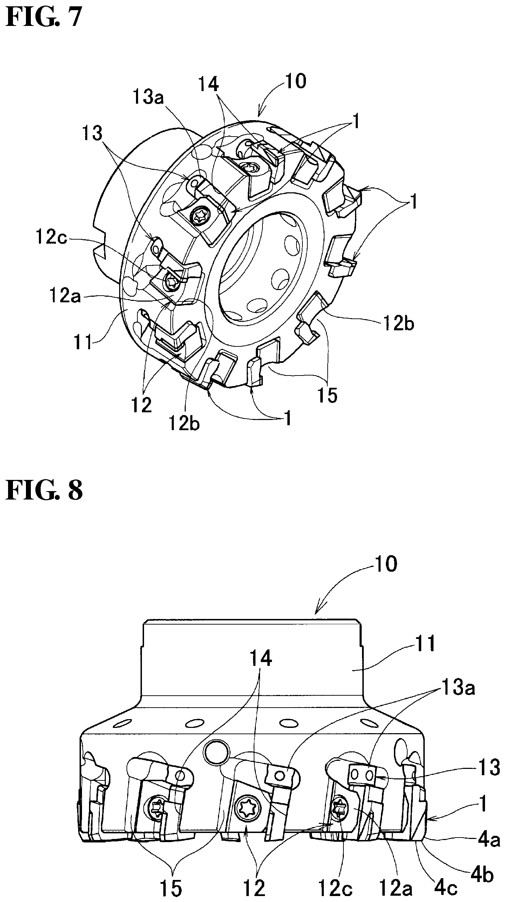

Next, a specific example of a face milling cutter using the above-mentioned cutting insert 1 according to an embodiment of this invention will be described with reference to Fig. 7 to Fig. 9 in the accompanying drawings.

A face milling cutter 10 illustrated includes a tool body 11, the cutting insert 1, a clamp mechanism 12, and an edge deflection adjustment mechanism 13.

In the tool body 11, a plurality insert support seats 14 that supports respective cutting inserts 1, and a plurality chip pockets 15 facing the respective insert support seats are provided in the outer circumference in a circumferential direction with a constant pitch.

In each cutting insert 1, the flat cutting edge 4c is disposed in the front face of the tool body 11, and the major cutting edge 4a is disposed in the outer circumference of the tool body 11. Furthermore, the major cutting edge 4a in a posture having inclination of θ₂ with respect to a line perpendicular to the axis of the cutter is mounted in the insert support seat 14 provided in the outer circumference of the end of the tool body 11.

The cutting insert 1 is then fixed to the tool body 11 by the clamp mechanism 12. The clamp mechanism 12 is a well-known mechanism that combines a wedge-shaped clamp piece 12a and a clamp bolt 12c (the illustrated one is what is called W bolt with one end side to be screwed into the tool body 11 and the other end side to be screwed into the clamp piece 12a, the both end sides being reversely screwed) that draws the clamp piece 12a into a wedge groove 12b.

The edge deflection adjustment mechanism 13 is formed of an adjustment bolt 13a that is screwed into the tool body 11 from the side with the insert support seat 14 provided.

The adjustment bolt 13a is a bolt in which pin holes each to be engaged with a pin spanner (not illustrated) for a rotational operation are provided in the outer circumference of the head portion in a circumferential direction with a constant pitch. The adjustment bolt 13a is disposed in the back of the insert support seat 14.

The top head surface of the adjustment bolt 13a is made to come into contact with the cutting insert 1 seated on the insert support seat 14, and the amount of screwing of the adjustment bolt 13a into the tool body 11 is increased/decreased so that the axial positions of the cutting edges of the cutting inserts 1 are aligned.

Since thus configured face milling cutter 10 adopts the above-described cutting insert 1, burr is reduced on the cutter cut-through side of a machined surface and chip evacuation performance is improved, and in addition, the strength of a corner formed in the cutting edge is increased. Consequently, improvement in durability, improvement in stability of machining, improved quality of a machined surface can be expected.

### EXAMPLES

The results of evaluation tests regarding the inclination angle θ₁ of the chamfer edge and the inclination angle θ₂ of the major cutting edge are described below.

### - TEST 1 -

The relationship between the size of the inclination angle θ₁ of the chamfer edge and occurrence conditions of burr, chipping was examined under the following conditions. Evaluation equipment: vertical machining center having the main axis of BT30
Evaluation tool: RF4080R manufactured by Sumitomo Electric Hard Metal Co., Ltd. (the number of edges = 1)
Cutting insert: four types (no cutting edge with the inclination of θ₂) with the inclination angle θ₁ of the chamfer edge included in the cutting edge chip made of single crystal diamond set to 10°, 20°, 45°, 75°
Workpiece: AC4C-T5 (50 mm wide aluminum alloy)
Cutting conditions: cutting speed Vc = 1000 m/min and 2300 m/min, feed rate per edge fz = 0.15 mm, depth of cut ap = 0.5 mm, nominal width of cut ae = 50 mm, wet cutting

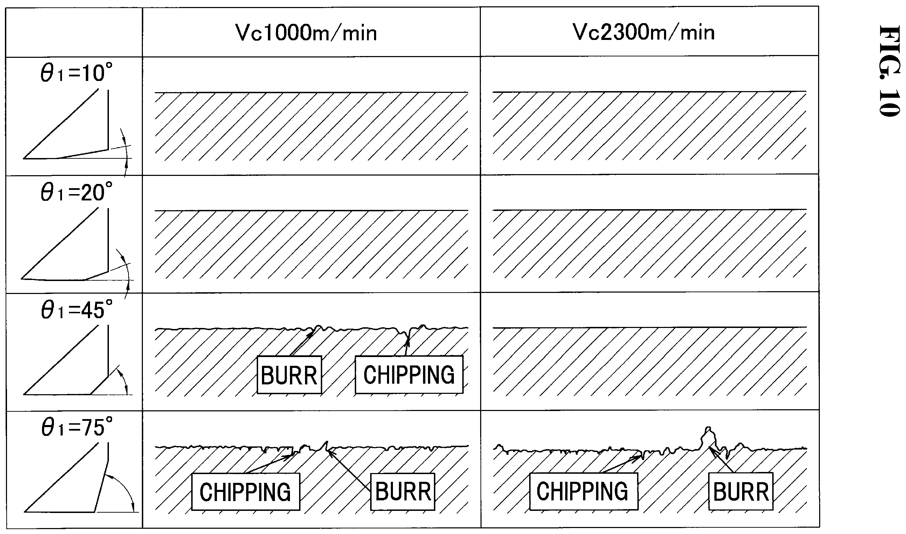

The result of this evaluation test is illustrated in Fig. 10. Fig. 10 is a table obtained by photographing the corner on the cutter cut-through side of a machined workpiece by a camera and profiling the image in an obtained enlarged photograph. As seen from this table, for the inclination angle θ₁ of 45°, 75° of the chamfer edge, burr and chipping occur at the corner on the cutter cut-through side of the machined surface of workpiece W.

Those burr and chipping are more noticeable as the inclination angle θ₁ is increased. On the other hand, for the inclination angle θ₁ of 10°, 20° of the chamfer edge, a favorable condition is ensured with no burr and chipping at the corner on the cutter cut-through side of the machined surface of workpiece W.

### - TEST 2 -

The relationship between the size of the inclination angle θ₂ of the major cutting edge and processing conditions of chips was examined under the following conditions. Evaluation equipment: vertical machining center having the main axis of BT30
Evaluation tool: cutter manufactured by Sumitomo Electric Hard Metal Co., Ltd. (the tool in Fig. 7)
Cutting insert: two types (no cutting edge with the inclination of θ₁) with the inclination angle θ₂ of the major cutting edge included in the cutting edge chip made of single crystal diamond set to 45°, 75°
Workpiece: ACD 12
Cutting conditions: cutting speed Vc = 2261 m/min (n = 9000 min-1), feed rate per edge fz = 0.15 mm, depth of cut ap = 0.4 mm, nominal width of cut ae = 50 mm, the number of edges: 1, dry cutting (dry type was used for the purpose of photographing)

The result of this evaluation test is illustrated in Fig. 1. Although for the inclination angle θ₂ of 45° of the major cutting edge, chips were favorably curled and finely divided, for the inclination angle θ₂ of 75°, chips extending almost straight were generated.

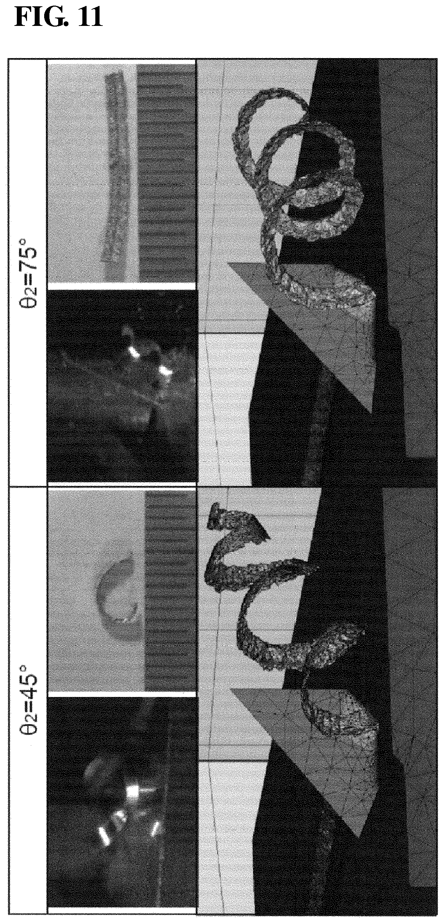

It is to be noted that in the photograph of actual machining of Fig. 11, n = 1000 min⁻¹ for the purpose of photographing. In the photograph, the shape of chips and the evacuation direction are not clear, and so a schematic figure of the shape and the evacuation direction are also illustrated in Fig. 11.

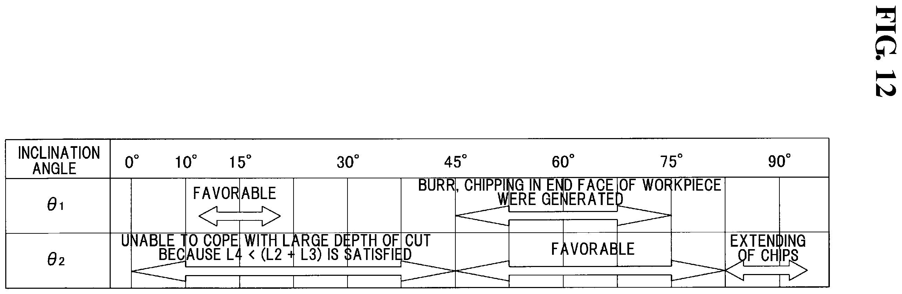

The evaluation result of Tests 1, 2 are summarized in Fig. 12.

### - TEST 3 -

The relationship between the size of the inclination angle θ₂ of the major cutting edge and processing conditions of chips was examined under the following conditions. Evaluation equipment: vertical machining center having the main axis of BT30 Evaluation tool: cutter manufactured by Sumitomo Electric Hard Metal Co., Ltd. (the tool in Fig. 7)

Cutting insert: one type with the inclination angle θ₁ of the chamfer edge included in the cutting edge chip made of single crystal diamond set to 10° and L2 : L3 = 2 : 8, and the other type with the inclination angle θ₁ of the chamfer edge set to 20° and L2 : L3 = 5 : 5, each inclination angle θ₂ of the major cutting edge is set to 45°.
Workpiece: ACD12
Cutting conditions: cutting speed Vc = 2261 m/min (n = 9000 min-1), feed rate per edge fz = 0.15 mm, depth of cut ap = 0.4 mm, nominal width of cut ae = 50 mm, the number of edges: 1,

For each cutting insert, chips were favorably curled and finely divided, and a favorable condition is ensured with no burr and chipping at the corner on the cutter cut-through side of the machined surface of workpiece W.

### Reference Signs List

1 Cutting insert
2 Base metal
3 Cutting edge chip
4 Cutting edge
4a Major cutting edge
4b Chamfer edge
4c Flat cutting edge
5 Rake face
6 Side face
θ₁ Inclination angle of chamfer edge
θ₂ Inclination angle of major cutting edge
C Corner at position where chamfer edge and major cutting edge intersect
θ₃ Corner angle of corner C
L1 Installation area length of flat cutting edge in the direct view of the side face on the flat cutting edge side
L2 Installation area length of chamfer edge in the direct view of the side face on the flat cutting edge side
L3 Installation area length of major cutting edge in the direct view of the side face on the flat cutting edge side
L4 Installation area length of cutting edge in direction of cut
10 Face milling cutter
11 Tool body
12 Clamp mechanism
12a Clamp piece
12b Wedge groove
12c Clamp bolt
13 Edge deflection adjustment mechanism
13a Adjustment bolt
14 Insert support seat
15 Chip pocket

## Claims

1. A cutting insert comprising a cutting edge formed by an intersection ridge between a rake face and a side face, the cutting edge including a major cutting edge, a flat cutting edge, and a chamfer edge disposed between the major cutting edge and the flat cutting edge,
wherein in a direct view of a side face near the flat cutting edge, a ratio of installation area length L2 of the chamfer edge to installation area length L3 of the major cutting edge is L2 : L3 = 2 : 8 to 5 : 5, and inclination angle θ₁ of the chamfer edge with respect to the flat cutting edge and inclination angle θ₂ of the major cutting edge with respect to the flat cutting edge are set to have a relationship of θ₁ < θ₂.

2. The cutting insert according to Claim 1,
wherein the inclination angle of the chamfer edge with respect to the flat cutting edge is given by θ₁ = 10° to 30°, and the inclination angle of the major cutting edge with respect to the flat cutting edge is given by θ₂ = 45° to 80°.

3. The cutting insert according to Claim 1 or 2,
wherein in the direct view of the side face near the flat cutting edge, let L1 be an installation area length of the flat cutting edge, then a condition of L1 > (L2 + L3) is satisfied.

4. The cutting insert according to any one of Claims 1 to 3,
wherein a material of the cutting edge is a single crystal diamond or a diamond sintered body.

5. A face milling cutter comprising a tool body, the cutting insert according to any one of Claims 1 to 4, a clamp mechanism, and an edge deflection adjustment, wherein for the cutting insert, the flat cutting edge is disposed in a front face of the tool body, the major cutting edge is disposed in an outer circumference of the tool body, and the major cutting edge further in a posture having an inclination of 45° to 80° with respect to a line perpendicular to an axis of a cutter is mounted in an outer circumference of an end of the tool body.
